# EUROPEAN PATENT APPLICATION

(11) **EP 3 647 969 A1**
(43) Date of publication of application: **06.05.2020**
(21) Application number: 18203864.6
(22) Date of filing: 31.10.2018
(51) Int. Cl.: G06F 16/907, G06Q 40/00

(54) **METHOD AND SYSTEM FOR AUTOMATED EXCHANGE OF DATA**

(71) Applicant: Siemens Aktiengesellschaft, 80333 München (DE)
(72) Inventor: Zillner, Sonja, 80802 München (DE)

(57) **Abstract**

A data exchange system (1) comprising at least one data source (2) of a data provider registered at the data exchange system (1) and adapted to provide data for the data exchange system (1), wherein each data source (2) comprises an associated data source openness profile, DSOP, indicating an openness of the data provided by the respective data source (2); a semantic mapping unit, SMU, (3A) connected to the data sources (2) and adapted to map data provided by a data source (2) into a semantic model, SM, describing the provided data, wherein semantic meta data of the data source openness profile, DSOP, of the respective data source (2) is captured in an encapsulated data asset, EDA, which further includes data provided by the data source (2) and the associated semantic model, SM, describing the data provided by the data source (2); and a match making unit, MMU, (3B) adapted to compare a data request profile, DRP, associated with a data request, REQ, received from an application, APP, registered at the data exchange system (1) and executed on a user device (4) with the encapsulated data assets, EDAs, provided by the semantic mapping unit, SMU, (3A) to identify at least one encapsulated data asset, EDA, suitable for the respective application, APP, wherein the data and the semantic model, SM, included in the identified suitable encapsulated data asset, EDA, are automatically transferred by the match making unit, MMU, (3B) to the application, APP, executed on the user device (4) for processing the data based on the semantic model, SM.

## Description

The invention relates to a method and system for automated exchange of data, in particular by means of a cloud platform.

Access to a wide range of data sources such as sensors and databases is gaining more and more importance for developing and using industrial data applications, in particular applications analyzing data by data sources of automation systems.

However, operators of automation systems hesitate to share the data generated by data sources with third parties. A reason for this is the lack of a technical infrastructure which provides a transparent and controlled exchange and sharing of data generated by data sources between partners.

Accordingly, it is an object of the present invention to provide a method and system enabling a controlled and automated data exchange between data providers and data processing applications executed on user devices.

This object is achieved according to a first aspect of the present invention by a data exchange system comprising the features of claim 1.

The invention provides according to the first aspect a data exchange system comprising
at least one data source of a data provider registered at the data exchange system and adapted to provide data for the data exchange system, wherein each data source comprises an associated data source openness profile indicating an openness of the data provided by the respective data source,
a semantic mapping unit connected to the data sources and
adapted to map data provided by a data source into a semantic model describing the provided data, wherein semantic meta data of the data source openness profile of the respective data source is captured in an encapsulated data asset which further includes data provided by the data source and the associated semantic model describing the data provided by the data source and
a match making unit adapted to compare a data request profile associated with a data request received from an application registered at the data exchange system and executed on a user device with the encapsulated data assets provided by the semantic mapping unit to identify at least one encapsulated data asset suitable for the respective application, wherein the data and the semantic model included in the identified suitable encapsulated data asset are automatically transferred by the match making unit to the application executed on the user device for processing the data based on the semantic model.

In a possible embodiment of the data exchange system according to the first aspect of the present invention, the application executed on a processor of the user device is adapted to generate the data request and to send the generated data request to the match making unit of the data exchange system to receive suitable data from at least one registered data source.

In a further possible embodiment of the data exchange system according to the first aspect of the present invention, the application comprises an associated data request profile encompassing information about the respective data request used by the match making unit to identify at least one suitable encapsulated data asset for the respective application.

In a further possible embodiment of the data exchange system according to the first aspect of the present invention, the data sources comprise sensors and databases of data providers connected to interfaces of said data exchange system.

In a further possible embodiment of the data exchange system according to the first aspect of the present invention, the encapsulated data assets are stored in a semantic data storage of said data exchange system.

In a still further possible embodiment of the data exchange system according to the first aspect of the present invention, the data of the data source included in the encapsulated data asset comprises structured data or unstructured raw data.

In a further possible embodiment of the data exchange system according to the first aspect of the present invention, the unstructured raw data provided by a data source are annotated by semantic labels included in the encapsulated data asset providing meta information about the raw data and/or about the data source.

In a still further possible embodiment of the data exchange system according to the first aspect of the present invention, the data request profile associated with a data request encompasses meta information about the data request including preferences and/or constraints of the data requested by the application.

In a further possible embodiment of the data exchange system according to the first aspect of the present invention, the match making unit is adapted to rank the identified suitable encapsulated data assets and to transfer automatically the most suitable encapsulated data asset to the requesting application.

In a still further possible embodiment of the data exchange system according to the first aspect of the present invention, the used semantic models are coded in an RDF data format and stored in a semantic data storage of the data exchange system.

In a still further possible embodiment of the data exchange system according to the first aspect of the present invention, the data exchange system is implemented on a cloud platform communicating with a plurality of user devices and/or a plurality of data sources via a data network.

In a further possible embodiment of the data exchange system according to the first aspect of the present invention, the user devices comprise mobile user entities and/or not-mobile user terminals.

In a still further possible embodiment of the data exchange system according to the first aspect of the present invention, the semantic labels provided as meta information about the unstructured data and/or structured data comprise source data quality metrics and/or key performance indicators.

In a still further possible embodiment of the data exchange system according to the first aspect of the present invention, the data provided by a data source and captured in an encapsulated data asset comprise time stamps indicating the time when the data has been provided by the data source and/or the time when the data has been captured and included into the encapsulated data asset.

In a still further possible embodiment of the data exchange system according to the first aspect of the present invention, each encapsulated data asset is valid for an associated time period, wherein the match making unit transfers only a valid encapsulated data asset to the application executed on the user device.

In a still further possible embodiment of the data exchange system according to the first aspect of the present invention, the semantic mapping unit comprises encryption means adapted to encrypt the structured or unstructured data provided by a registered data source with an encryption key.

In a still further possible embodiment of the data exchange system according to the first aspect of the present invention, the application executed on the user device comprises a processor adapted to execute a machine learning algorithm, in particular an artificial neural network trained by the data included in the encapsulated data asset transferred by the match making unit to the user device.

The invention further provides according to a second aspect a method for automated exchange of data comprising the features of claim 18.

The invention provides according to the second aspect a method for automated exchange of data comprising the steps of: mapping data provided by data sources into semantic models describing the respective data,
capturing semantic meta data provided by data source openness profiles of the data sources in encapsulated data assets, wherein each encapsulated data asset further includes the data provided by the respective data source and the associated semantic model describing the respective data,
comparing data request profiles associated with data requests received from applications executed on user devices with the encapsulated data assets to identify encapsulated data assets matching the data request profiles, wherein at least one identified suitable encapsulated data asset is transferred to the application and
processing the data included in the transferred encapsulated data asset by the application based on the semantic model included in the transferred encapsulated data asset.

In the following, possible embodiments of the different aspects of the present invention are described in more detail with reference to the enclosed figures.
- Fig. 1: shows a block diagram for illustrating a possible exemplary embodiment of a data exchange system according to a first aspect of the present invention;
- Fig. 2: shows a flowchart for illustrating a possible exemplary embodiment of a method for automated exchange of data according to the second aspect of the present invention;
- Fig. 3: shows a schematic diagram for illustrating a possible implementation of an encapsulated data asset used by the method and system according to the present invention.

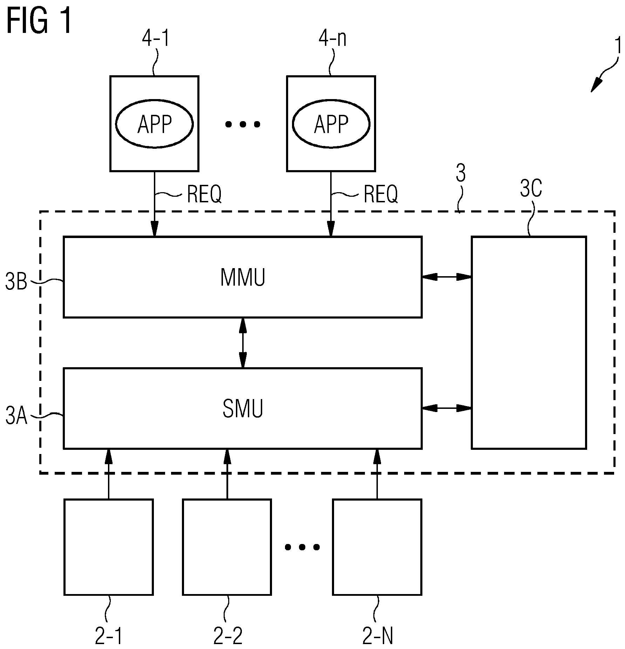

As can be seen in the block diagram of Fig. 1, the data exchange system 1 according to the first aspect of the present invention can comprise one or more data sources 2-1, 2-2...2-n registered at the data exchange system 1 and adapted to provide data for the data exchange system 1. The number of data sources can vary depending on the use case. The data exchange system 1 can comprise a plurality of heterogeneous data sources 2-i connected to the data exchange system 1 via wired or wireless links. Each data source can be operated by a data provider. A data provider can operate one or more data sources 2-i. The data sources 2-i can comprise different types of data sources such as sensors or databases. The sensors can include for instance image generators but also other sensors generating for instance time series sensor data such as sensor data indicating pressure, temperature, etc. Data provided by the data sources can comprise structured data but also unstructured data. Unstructured data can comprise in a possible embodiment image data generated by an image generation unit. Sensor data can comprise time series data (one-dimensional) but also sensor data with more dimensions, e.g. two- or three-dimensional image data. Each data source 2-i of the data exchange system 1 comprises an associated data source openness profile DSOP indicating an openness of the data provided by the respective data source 2-i.

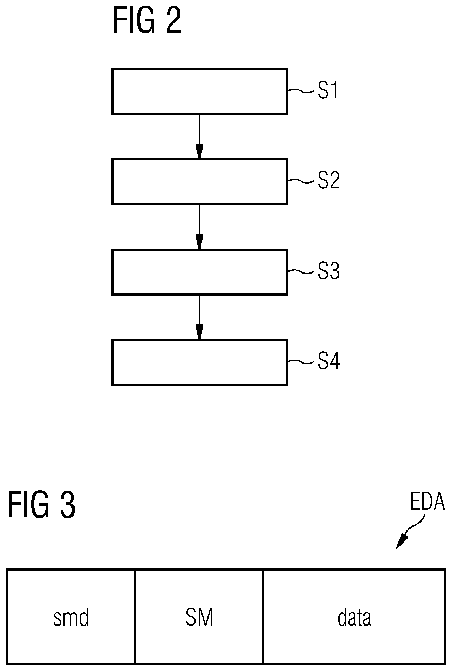

In the illustrated embodiment of Fig. 1, the data exchange system 1 comprises a platform 3 including a semantic mapping unit (SMU) 3A, a match making unit (MMU) 3B and a semantic data storage 3C. The data sources 2-i can be connected via interfaces to the semantic mapping unit 3A as shown in Fig. 1. The semantic mapping unit 3A of the platform 3 is connected to the plurality of data sources 2-i and is adapted to map data provided by a data source into a semantic model SM describing the received data provided by the respective data source 2-i. Semantic meta data smd of the data source openness profile DSOP of the respective data source 2-i is captured automatically by the semantic mapping unit 3A in an encapsulated data asset EDA which further includes data provided by the respective data source 2-i and the associated semantic model SM describing the data provided by the data source. In a possible implementation, the encapsulated data asset EDA comprises a data structure as illustrated in Fig. 3. As can be seen in Fig. 3, the encapsulated data asset EDA includes semantic meta data smd of the data source openness profile DSOP, the semantic model SM describing the data provided by the data source and the data provided by the respective data source. The generated encapsulated data asset EDA can be stored in a possible embodiment at least temporarily in the semantic data storage 3C of the platform 3. Accordingly, the semantic data storage 3C is adapted to store a plurality of generated encapsulated data assets EDA including data originating from different data sources 2-i of different data providers.

The platform 3 of the data exchange system 1 further comprises a match making unit 3B connected to the semantic mapping unit 3A and the semantic data storage 3C of the platform 3 as illustrated in Fig. 1. A plurality of user devices 4-1 ... 4-m can also be connected via interfaces to the platform 3 of the data exchange system 1 as shown in Fig. 1. Each user device 4-i can comprise at least one processor adapted to execute an application APP. The application APP has been registered at the data exchange system 1 and can be executed on a processor of the user device 4-i. The user devices 4-i can comprise mobile user entities and/or not-mobile user terminals. The user devices 4-i can be connected via a local or wide area network with the platform 3 of the data exchange system 1. When executed on the processor of the user device 4-i, the application APP can generate a data request REQ applied to the match making unit 3B. The match making unit 3B is adapted to compare a data request profile DRP associated with the data request REQ received from the application APP with the encapsulated data assets EDAs provided by the semantic mapping unit 3A and stored in the semantic data storage 3C to identify at least one encapsulated data asset EDA suitable for the respective application APP. The data and the semantic model SM included in the identified suitable encapsulated data asset EDA are automatically transferred by the match making unit 3B of the platform 3 to the requesting application APP executed on the processor of the user device 4-i for processing the received data based on the received semantic model SM.

The application APP executed on the processor can for instance comprise a data analyzing application APP adapted to analyze data originating from a data source 2-i of the data exchange system 1. The application APP executed on the processor of the user device 4-i is adapted to generate the data request REQ and to send the generated data request REQ to the match making unit 3B of the data exchange system 1 to receive suitable data from at least one registered data source 2-i which can be processed by the application APP, for instance for analyzing the received suitable data. The application APP registered with the data exchange system 1 comprises an associated data request profile DRP encompassing information about the respective data request REQ used by the match making unit 3B to identify at least one suitable encapsulated data asset EDA for the respective application APP. Encapsulated data assets EDAs generated by the semantic mapping unit SMU 3A can be either directly transferred to the match making unit 3B and/or stored in the semantic data storage 3C of the platform 3. The semantic data storage 3C can comprise a central database and/or distributed databases connected in a data network. Data of a data source 2-i included in an encapsulated data asset EDA which may be stored in the semantic data storage 3C of the platform 3 can comprise in a possible embodiment structured data, in particular structured datasets, and also unstructured data, for instance text data, time series data generated by a sensor, or image data. In a possible embodiment, the unstructured data provided by a data source 2-i are annotated by semantic labels included in the encapsulated data asset EDA providing meta information about the raw data and/or providing meta information about the respective data source 2-i.

The data request profile DRP associated with the data request REQ generated by an application APP can encompass meta information about the data request REQ including preferences and/or constraints of the data requested by the respective application APP. In a possible embodiment, the match making unit 3B of the platform 3 is adapted to calculate a matching score or metric and to rank automatically the identified suitable encapsulated data assets EDAs and to transfer automatically the most suitable (highest rank) encapsulated data asset EDA to the requesting application APP. As illustrated in the diagram of Fig. 3, the encapsulated data asset EDA comprises in a preferred embodiment semantic meta data extracted from the data source openness profile DSOP of the respective data source 2-i, the data provided by the data source (e.g. structured or unstructured data) as well as the associated semantic model SM describing the data provided by the data source 2-i. The used semantic model SM can be coded in a possible embodiment in an RDF data format and can also be stored in the semantic data storage 3C of the data exchange system 1. In the illustrated embodiment of Fig. 1, the data exchange system 1 is implemented on a cloud platform 3 communicating with a plurality of user devices 4-i and/or communicating with a plurality of data sources 2-i via a data network. The semantic labels provided as meta information about the unstructured data and/or structured data can comprise in a possible embodiment source data quality metrics and/or key performance indicators.

In a possible embodiment, the data provided by a data source 2-i and captured in an encapsulated data asset EDA comprises time stamps. These time stamps can indicate in a possible embodiment the time when the data has been provided by the respective data source 2-i. In a further possible embodiment, the time stamps can also indicate the time when the data has been captured and included into the encapsulated data asset EDA by the semantic mapping unit 3A. In a possible embodiment, each encapsulated data asset EDA is valid only for an associated time period. The match making unit 3A can transfer in a possible embodiment only a valid encapsulated data asset EDA to the requesting application APP executed on the user device 4-i. In a further possible embodiment, the semantic mapping unit 3A of the platform 3 can comprise encryption means adapted to encrypt the structured or unstructured data provided by a registered data source 2-i with an encryption key. In a possible embodiment, the application APP executed on a processor of a user device 4-i can comprise a machine learning algorithm, in particular an artificial neural network ANN. A machine learning algorithm can be trained in a possible embodiment by the data included in the encapsulated data asset EDA and transferred by the match making unit 3B to the application APP executed on the user device 4-i.

Fig. 3 shows a flowchart of a possible exemplary embodiment of a method for automated exchange of data according to a further aspect of the present invention. In the illustrated exemplary embodiment, the method comprises four main steps S1 to S4.

In a first step S1, data provided by data sources 2-i of the system 1 are mapped into semantic models SM describing the respective data.

In a further step S2, semantic meta data provided by data source openness profiles DSOPs of the data sources 2-i are captured in encapsulated data assets EDAs, wherein each encapsulated data asset EDA further includes the data provided by the respective data source 2-i and the associated semantic model SM describing the respective data. The generated encapsulated data assets EDAs can be stored in a possible embodiment at least temporarily in a semantic data storage.

In a further step S3, data request profiles DRPs associated with data requests REQs received from applications APPs executed on user devices 4-i are compared with the encapsulated data assets EDAs stored in the semantic data storage 3C to identify encapsulated data assets EDAs matching the data request profiles DRPs, wherein at least one identified suitable encapsulated data asset EDA is transferred automatically to the requesting application APP.

In a further step S4, the data included in the transferred encapsulated data asset EDA are processed by the application APP executed on the processor of the user device 4-i based on the semantic model SM included in the transferred encapsulated data asset EDA.

The method and system 1 according to the present invention has the advantage that data providers operating one or more data sources can control the degree of openness (or respectively closeness) of their data sources and/or data assets according to their particular needs by data sharing. The method and system 1 according to the present invention allows to define a degree of openness of data generated by a data source 2-i of a data provider by means of an associated data source openness profile DSOP. The associated data source openness profile DSOP of a data source 2-i can comprise in a possible implementation a metric indicating a degree of openness which can range from "close" where the data access is only possible for the data owner to "open" where the data is open to the public. Between these two extremes, there can be any variants in terms of who is empowered to use the data (stakeholder, community member), to which extent and under which conditions (constraints) to describe the degree of openness of the data provided by a data source 2-i. Consequently, the data exchange system 1 and method according to the present invention enable a flexible exchange, sharing and integration of data sources in accordance to the degree of openness appropriate for an envisioned industrial application ensuring cross-organizational data access by data-driven applications APPs. Different factors or constraints can influence the degree of openness of the data generated by a data source 2-i as indicated in the associated data source openness profile DSOP. A possible constraint is the technical design such as Berners-Lee's proposed 5 Star Deployment Scheme for Open Data. In general, the semantic technologies of RDF, OWL and SparQL provide a technical foundation for defining the technical design. A further constraint having an impact on the openness of the data can be legal restrictions such as legal regimes, copyrights or IPR. These constraints can limit or prevent the reuse and distribution of generated data provided by data sources 2-i. These restrictions can be defined in machine readable contracts between data providers and data consumers. A further possible constraint indicating an openness of data as defined in an associated data source openness profile DSOP can be pricing data determining a price a third party will pay to get access to data generated by a particular data source.

The method and system 1 according to the present invention empower data providers to exchange their data assets in transparent, controlled and automated manner with requesting third parties in the role of data users. The method and system 1 according to the present invention establish a semantic-based mechanism for the flexible, transparent and automated exchange of data generated by data sources 2-i in accordance to data source openness profiles DSOPs specified by data providers and data request profiles DRP specified by data users. The data source openness profiles DSOPs can be loaded in a possible embodiment from a data provider module of a data provider. In the data exchange system 1 according to the present invention, data exchange can be accomplished automatically, even in real time. The data exchange system 1 according to the present invention provides a semantic-based technical infrastructure enabling an automated match making between data generated by data sources 2-i of different data providers and a plurality of data users or data consumers in accordance to predefined profiles, in particular data source openness profiles DSOPs and profiles of data requests REQs by seamlessly executing the associated transactions, such as payments or automated initiation of machine readable contract agreements. The method and system 1 according to the present invention introduces a mechanism for the automatic coordination of a workflow that allows a seamless exchange and integration of various heterogeneous data sources 2 originating from legacy systems, databases or from other analytic applications or other systems of a data provider to a requesting application APP running on a processor of a user device 4, for instance an industrial data application submitting a data query request to the platform 3.

The requested data is exchanged in encapsulated data assets EDAs encompassing its structured or unstructured data, the semantic models SM and/or ontologies as well as the underlying meta data in processable manner. The encapsulated data assets EDAs incorporate data content, its semantic as well as any information related to its access and usage constraints. The platform 3 of the data exchange system 1 comprises the semantic mapping unit 3A, the match making unit 3B as well as the semantic data storage 3C as illustrated in the block diagram of Fig. 1. Interfaces to connectors can enable the import of data sources 2-i from any arbitrary device or data source 2-i such as sensors, databases, etc. The semantic mapping unit 3A enables the automated mapping of data structures of original data sources into commonly agreed semantic models SM and allows to enhance unstructured data sources by semantic labels.

A data openness profile enhancer can ensure that the corresponding data source openness profile DSOP can be used to enhance the original data source by related meta data. The data openness profile enhancer can take care that while mapping the original data source to the apparatus important semantic meta data from the data source openness profile DSOP is extracted and captured in the respective encapsulated data asset EDA.

The semantic data storage 3C can allow the storage of semantically enhanced raw data as well as domain ontologies providing the corresponding labels for annotating raw data and semantic context models providing the required background knowledge for enhancing raw data by process, context and situational labels. In addition, the encapsulated data assets EDAs can be stored in the semantic data storage 3C of the platform.

The match making unit 3B enables the automated and efficient match-making of data demand and data supply. The technical infrastructure of the match making unit 3B can rely on the information captured within the encapsulated data assets EDAs, in particular the extracted semantics of the data source openness profile DSOP as well as the extracted context and background information used for matchmaking. The related information of the data request profiles DRPs are shared with the match making unit 3B whenever a data request REQ is initiated by the data-driven application APP executed on the processor of the user device 4-i. The automated matchmaking between data supply described within the encapsulated data asset EDA and the data source openness profile DSOP of the available data sources 2-i and the demand captured by the data request profile DRP associated with the data request REQ can be performed by a matchmaking algorithm executed on a processor of the matchmaking unit 3B, wherein the matchmaking algorithm is adapted to align the semantic information of the supply side and the demand side.

In a possible embodiment, the platform 3 can comprise a control unit encompassing an execution engine which can be adapted to process associated IPR and pricing information data to trigger automated processes accordingly. In a possible implementation, the execution engine can also provide a refunding mechanism or process such as a payment process. Further, the execution engine can process the data to ensure a transparent legal basis, e.g. triggering of licensing or usage agreements. Further, the execution engine can be used for scoping of the data exchange, e.g. partitioning or anonymization of original data sources.

On the demand side, each data consuming data application APP can comprise a data request profile DRP encompassing information about its data request REQ from which the search criteria/filter, data requirements such as size and real-time as well as relevance level (importance for an application) as well as other preferences and constraints can be applied.

The method and system 1 according to the present invention can comprise in a possible embodiment a phase of preprocessing or registration and preparation as well as a phase of operation.

In the registration phase, a data provider with his data source openness profiles DSOPs (one per data source) can be registered in the platform 3. The registration can encompass different dimensions, in particular establishing connectors for the automated data transfer of the original data location to the semantic data processing component, a semantic enrichment of data sources in accordance to available background and context information and the complementation of the semantically enhanced data source with information from the data source openness profile (e.g. meta data about for instance licensing or usage constraints). The result of this initial step is the availability of encapsulated data assets EDAs covering the original data source information, its semantic description as well as any description related to its access and usage constraints.

Further, data users can be registered in the platform 3 by informing it about its data request profiles DRPs. A data user can be informed by an industrial application APP, for example a dashboard for controlling energy efficiency with clearly formulated data requests REQs and/or queries in its source code. The data request profile DRP can encompass two parts. A first part can be a list of data requests REQs (at least one data request), wherein each data request REQ is triggered by a particular point in time while running the respective data application APP. Each data request REQ can encompass meta information that can be used as search terms for identifying suitable data sources. A data request profile DRP encompasses as a second part any formal information required for handling access and usage rights, constraints such as licensing agreements, initiating legal contracts or triggering payments.

After the preparation phase has been accomplished, the platform 3 can ensure that data users and data providers can seamlessly interact with each other. The preparation phase is mandatory for initializing the overall data exchange system 1 and can be repeated partially whenever a new data user and/or a new data provider is registered in the data exchange system 1.

After the preparation phase has been accomplished, the data exchange system 1 according to the present invention can be operated in an operation phase. In the operation phase, the application APP executed on a processor of a user device 4-i can send a data request REQ enhanced by corresponding meta information to the platform 3. In accordance to the search terms, the match making unit 3B of the platform 3 can filter and/or identify in a first step a list of suitable data sources which are available. In a further step, the match making unit 3B can check via the information of the data source openness profile DSOP whether the requesting data user or application APP is entitled to get access to the respective data source 2-i. For example, some data sources 2-i are only available for a particular group of stakeholders. Deterministic constraints related to the degree of openness can be checked in this step. Accordingly, the list of suitable encapsulated data assets EDAs can be reduced accordingly.

In a further possible embodiment, the search results can be ordered. In this step, the most suitable encapsulated data asset EDA is identified. In a possible embodiment, all data sources 2-i can be sorted in accordance to their fit. In this step, the constraints of the data openness profile captured within each suitable encapsulated data asset EDA can be matched to the data request profile DRP of the requesting application APP. A matchmaking algorithm executed by a processing unit of the match making unit 3B can align the constraints and profile information to identify a most suitable encapsulated data asset EDA and/or order the encapsulated data assets EDAs in accordance to the matchmaking results. In a possible embodiment, this can also include the identification of an optimal pricing for the data consuming application, e.g. in case the industrial data application has informed the data exchange system 1 that a particular data request REQ is application-critical and requires manually cleaned data which implies that a data user of the application APP is willing to pay a relatively high price for the fulfillment of the respective data request REQ.

In a further step, the data exchange is executed. In a possible embodiment, all licensing and pricing information data captured with the most suitable encapsulated data asset EDA can be executed. For instance, an automatic payment process can be triggered by the platform 3. Further, it is possible that a subscription agreement is automatically accomplished by the platform 3. In a possible embodiment, a data request profile DRP of a data-consuming application APP can specify which type of machine-readable licensing agreements the data consuming application is willing to sign in. This does establish the basis for an automated processing of transactions. The data of the most suitable encapsulated data asset EDA is transferred automatically by the platform to the data-consuming application.

The method and system 1 according to the present invention can be used in any technical infrastructure comprising data sources 2 and/or data-consuming applications APPs. The method and system 1 according to the present invention can be used for providing a platform 3 for data providers and data users. In a possible embodiment, stakeholders can be both data providers having one or more data sources and at the same time data users executing one or more applications APPs. The data received as a requesting application APP on the platform 3 can be processed and be used for different purposes. In a possible embodiment, the requested and received data extracted from the transferred encapsulated data asset EDA can be processed to generate control data and/or control signals to control actuators such as actuators of a machine or robot. Further, the received and extracted data can be processed by the application APP executed on the processor of the user device 4 to perform an analysis of the received data, e.g. to optimize processing steps performed by an automation system. In a still further possible embodiment, the data extracted from the transferred encapsulated data asset EDA can also be used as training data for training an artificial neural network ANN executed by the processor of the user device 4. For instance, a data request profile DRP or request REQ can comprise information indicating that the application APP requires data of a specific type and/or characteristic, for example training data. A data request profile DRP associated with a data request REQ triggered by an application APP can encompass any kind of meta information about the data request REQ including preferences and/or constraints of the data request REQ by the respective application APP. Meta information can comprise requested data formats, time periods and/or types of data. In a possible embodiment, the data exchange via the data exchange system 1 according to the present invention can be performed automatically in real-time.

## Claims

1. A data exchange system (1) comprising:
- at least one data source (2) of a data provider registered at the data exchange system (1) and adapted to provide data for the data exchange system (1),
wherein each data source (2) comprises an associated data source openness profile, DSOP, indicating an openness of the data provided by the respective data source (2);
- a semantic mapping unit, SMU, (3A) connected to the data sources (2) and adapted to map data provided by a data source (2) into a semantic model, SM, describing the provided data,
wherein semantic meta data of the data source openness profile, DSOP, of the respective data source (2) is captured in an encapsulated data asset, EDA, which further includes data provided by the data source (2) and the associated semantic model, SM, describing the data provided by the data source (2); and
- a match making unit, MMU, (3B) adapted to compare a data request profile, DRP, associated with a data request, REQ, received from an application, APP, registered at the data exchange system (1) and executed on a user device (4) with the encapsulated data assets, EDAs, provided by the semantic mapping unit, SMU, (3A) to identify at least one encapsulated data asset, EDA, suitable for the respective application, APP,
wherein the data and the semantic model, SM, included in the identified suitable encapsulated data asset, EDA, are automatically transferred by the match making unit, MMU, (3B) to the application, APP, executed on the user device (4) for processing the data based on the semantic model, SM.

2. The data exchange system according to claim 1, wherein the application, APP, executed on a processor of the user device (4) is adapted to generate the data request, REQ, and to send the generated data request, REQ, to the match making unit, MMU, (3B) of the data exchange system (1) to receive suitable data from at least one registered data source (2).

3. The data exchange system according to claim 1 or 2,
wherein the application, APP, comprises an associated data request profile, DRP, encompassing information about the respective data request, REQ, used by the match making unit, MMU, (3B) to identify at least one suitable encapsulated data asset, EDA, for the respective application, APP.

4. The data exchange system according to any of the preceding claims 1 to 3, wherein the data sources (2) comprise sensors and databases of data providers connected to interfaces of said data exchange system (1).

5. The data exchange system according to any of the preceding claims 1 to 4, wherein the encapsulated data assets, EDAs, are stored in a semantic data storage (3C) of said data exchange system (1).

6. The data exchange system according to any of the preceding claims 1 to 5, wherein the data of the data source (2) included in the encapsulated data asset, EDA, comprises structured data or unstructured raw data.

7. The data exchange system according to claim 6, wherein the unstructured raw data provided by a data source (2) are annotated by semantic labels included in the encapsulated data asset, EDA, providing meta information about the raw data and/or about the data source (2).

8. The data exchange system according to any of the preceding claims 1 to 6, wherein the data request profile, DRP, associated with a data request, REQ, encompasses meta information about the data request including preferences and/or constraints of the data requested by the application, APP.

9. The data exchange system according to any of the preceding claims 1 to 8, wherein the match making unit, MMU, (3B) is adapted to rank the identified suitable encapsulated data assets, EDAs, and to transfer automatically the most suitable encapsulated data asset, EDA, to the requesting application, APP.

10. The data exchange system according to any of the preceding claims 1 to 9, wherein the used semantic models, SM, are coded in an RDF data format and stored in a semantic data storage (3C) of the data exchange system (1).

11. The data exchange system according to any of the preceding claims 1 to 10, wherein the data exchange system (1) is implemented on a cloud platform (3) communicating with a plurality of user devices (4) and/or data sources (2) via a data network.

12. The data exchange system according to any of the preceding claims 1 to 11, wherein the user devices (4) comprise mobile user entities and/or not-mobile user terminals.

13. The data exchange system according to claim 6, wherein the semantic labels provided as meta information about the unstructured data and/or structured data comprise source data quality metrics and/or key performance indicators.

14. The data exchange system according to any of the preceding claims 1 to 13, wherein the data provided by a data source (2) and captured in an encapsulated data asset, EDA, comprise time stamps indicating the time when the data has been provided by the data source (2) and/or the time when the data has been captured and included into the encapsulated data asset, EDA.

15. The data exchange system according to any of the preceding claims 1 to 14, wherein each encapsulated data asset, EDA, is valid for an associated time period, wherein the match making unit, MMU, (3B) transfers only a valid encapsulated data asset, EDA, to the application, APP, executed on the user device (4).

16. The data exchange system according to any of the preceding claims 1 to 15, wherein the semantic mapping unit, SMU, (3A) comprises encryption means adapted to encrypt the structured or unstructured data provided by a registered data source (2) with an encryption key.

17. The data exchange system according to any of the preceding claims 1 to 16, wherein the application, APP, executed on a processor of the user device (4) comprises a machine learning algorithm, in particular an artificial neural network, ANN, trained by the data included in the encapsulated data asset, EDA, transferred by the match making unit, MMU, (3B) to the user device (4).

18. A method for automated exchange of data comprising the steps of:
- mapping (S1) data provided by data sources (2) into semantic models, SM, describing the respective data;
- capturing (S2) semantic meta data provided by data source openness profiles, DSOP, of the data sources (2) in encapsulated data assets, EDAs, wherein each encapsulated data asset further includes the data provided by the respective data source (2) and the associated semantic model, SM, describing the respective data;
- comparing (S3) data request profiles, DRPs, associated with data requests, REQs, received from applications, APPs, executed on user devices (4) with the encapsulated data assets, EDAs, to identify encapsulated data assets, EDAs, matching the data request profiles, DRPs,
wherein at least one identified suitable encapsulated data asset, EDA, is transferred to the application, APP; and
- processing (S4) the data included in the transferred encapsulated data asset, EDA, by the application, APP, based on the semantic model, SM, included in the transferred encapsulated data asset, EDA.
